# EUROPÄISCHE PATENTSCHRIFT

(11) **EP 1 426 520 B1**
(45) Veröffentlichungstag und Bekanntmachung des Hinweises auf die Patenterteilung: **09.08.2006**
(21) Anmeldenummer: 02026394.3
(22) Anmeldetag: 26.11.2002
(51) Int. Cl.: E04F 13/08, F16B 5/06

(54) **Kombination einer Platte oder eines Paneels und zumindest einer Befestigungsanordnung sowie Verfahren zur Befestigung einer Platte oder eines Paneels**
Combination of a plate or a panel with at least one mounting device and method for mounting a plate or a panel
Combinaison d'une plaque ou d'un panneau avec au moins un dispositif de fixation et procédé pour la fixation d'une plaque ou d'un panneau

(43) Veröffentlichungstag der Anmeldung: 09.06.2004
(73) Patentinhaber: hülsta-werke Hüls GmbH & Co. KG, 48703 Stadtlohn (DE)
(72) Erfinder: Tünte, Udo, 48358 Raesfeld (DE)
(74) Vertreter: HOFFMANN EITLE

(56) Entgegenhaltungen:
- EP-A- 0 980 943
- DE-A- 3 540 867
- GB-A- 2 097 035
- US-A- 3 038 571

## Beschreibung

### Technisches Gebiet

Die Erfindung betrifft eine Kombination einer Platte oder eines Paneels mit zumindest einer Befestigungsanordnung sowie ein Verfahren zur Befestigung einer Platte oder eines Paneels an einer Tragkonstruktion.

Für die Verkleidung von Wänden, Decken, Dachschrägen sowie sonstigen Innen- und Außenwänden, beispielsweise auch Fassaden, sowie für die Erstellung von neuen Wänden eines Raumes hat es sich bewährt, zunächst eine Tragkonstruktion vorzusehen, und an der Tragkonstruktion zahlreiche Platten derart aneinander angrenzend zu befestigen, dass eine Verkleidung einer vorhandenen Wand bzw. eine optisch ansprechende Oberfläche einer neu erstellten Wand entsteht. Die Platten müssen hierbei an den jeweils benachbarten Platten und/oder an der Tragkonstruktion derart befestigt werden, dass möglichst keine erkennbaren Fugen verbleiben.

### Stand der Technik

Die Anmelderin hat diesbezüglich in der WO 02/52113 eine Platte für den Innenausbau beschrieben, die mit benachbarten Platten unter Ausbildung einer Presspassung verbindbar ist, so dass benachbarte Platten stets optisch fugenfrei miteinander verbunden sind. Bei einem derartigen Verbund von Platten tritt die Besonderheit auf, dass sich Größenveränderungen der Platten infolge von Temperaturveränderungen und/oder Feuchtigkeitsaufnahme oder -verlust sämtlicher miteinander verbundener Platten über sämtliche Platten aufsummieren. Mit anderen Worten wird durch die Presspassung verhindert, dass beispielsweise bei Platten aus Holz oder Holzwerkstoffen infolge von Feuchtigkeitsverlust zwischen den einzelnen Platten Fugen entstehen. Vielmehr werden die miteinander verbundenen Platten durch die Presspassung weiterhin optisch fugenfrei aneinander gehalten. Derartige Abmessungsveränderungen infolge von Quellen oder Schwinden der einzelnen, miteinander verbundenen Platten äußern sich jedoch an den Rändern eines Plattenverbundes. Hier können sich die Ränder des Plattenverbundes durchaus um einige mm in ihrer Lage verändern. Dies bedeutet, dass die Befestigung der Platten an der Tragkonstruktion im Gegensatz zu der bislang praktizierten Art und Weise nunmehr derart erfolgen muss, dass Bewegungen einzelner Platten bezüglich der Tragkonstruktion zugelassen werden.

Die DE 30 46 297 A1 offenbart diesbezüglich eine Schiene, die an einer Tragkonstruktion befestigt werden kann, und an der ein Halteelement derart in Richtung der Schiene verschiebbar angebracht ist, dass es den Rand einer Platte umgreifen, oder in eine in der Platte ausgebildete Nut eingreifen kann. Diese Befestigung kann in Richtung der Schiene spielbehaftet ausgebildet werden. Diese Befestigung ist jedoch für die Befestigung einer Platte im Bereich einer Innenecke eines Raumes ungeeignet. Die Platte muss nämlich zunächst am Rand des Halteteils vorbei in ihre angebrachte Stellung geschwenkt werden, bevor das Halteteil nachfolgend derart verschoben werden kann, dass es die Platte in der angebrachten Stellung hält. Der Plattenbedarf für den eingreifenden Abschnitt des Halteteils ist jedoch so groß, dass im Bereich einer Innenecke zwischen der letzten Platte einer Wand und der daran, beispielsweise unter einem Winkel von 90°, angrenzenden Wand ein Spalt verbleibt, der unzulässig groß wäre. Eine derartige Situation kann nicht mit einfachen Mitteln und optisch ansprechend gelöst werden.

Die GB 2 097 035 A offenbart eine Befestigungsanordnung zur Befestigung von Platten an einer Rahmenkonstruktion. Die Befestigungsanordnung kann zweiteilig sein, wobei ein erstes Teil an der Rahmenkonstruktion angebracht wird, und ein zweites, mit der Platte verbundenes Teil mit dem ersten Teil verhakt wird.

Aus der DE 35 40 867 A1 geht ein Plastik-Clip zum Halten einer Matte an einem Träger hervor. Der Clip weist einen angelenkten Arm auf, der anfangs in die gleiche Richtung zeigt wie der Schaft des Clips. Nach der Montage der Matte kann der Arm über die Matte geklappt werden, um diese zu halten.

Die EP 0 980 943 A1 betrifft eine Halterung für Tragvorrichtungen von Wand- und Deckenverkleidungen, bei der zwischen der Halterung und Klemmzungen Tragschienen eingeklemmt sind. Die Klemmzungen können in die Halterung eingesteckt werden.

Schließlich offenbart die US 3,038,571 eine Befestigungsanordnung für Paneele, bei der im Randbereich der Paneele ein Halteprofil an ein Basisprofil angeschraubt wird. Die gezeigte Anordnung ist jedoch für eine optisch ansprechende Befestigung von Paneelen im Bereich einer Innenecke eines Raumes nicht geeignet.

### Darstellung der Erfindung

Der Erfindung liegt die Aufgabe zugrunde, eine Kombination einer Platte oder eines Paneels mit zumindest einer Befestigungsanordnung zu schaffen, die insbesondere in einer Richtung senkrecht zu einer betrachteten Plattenkante eine Bewegung der Platte zulässt, und die vergleichsweise kostengünstig und auch für die Besonderheiten einer Innenecke eines Raumes geeignet gestaltet werden kann. Ferner soll ein entsprechendes Verfahren zur Befestigung einer Platte oder eines Paneels an einer Tragkonstruktion geschaffen werden.

Die Lösung dieser Aufgabe erfolgt zum einen durch die Kombination nach Anspruch 1 und zum anderen durch das Verfahren gemäß Anspruch 15.

Demzufolge weist die Befestigungsanordnung der erfindungsgemäßen Kombination zum einen zumindest ein Basisteil, das an einer Tragkonstruktion befestigbar ist, und zum anderen zumindest ein Halteteil auf. Im Hinblick auf die Mehrteiligkeit ist zu sagen, dass diese auch einzelne Abschnitte einer Befestigungsanordnung umfasst, die bezüglich einander in der Weise beweg- oder veränderbar sind, wie dies nachfolgend erläutert wird. Ferner können das Basis- und das Halteteil in bestimmter Weise beweglich miteinander verbunden sein. In einem Grenzfall können das Basis- und das Halteteil auch einstückig miteinander sein, und derart bezüglich einander verformbar sein, dass die nachfolgend beschriebenen Funktionen gewährleistet werden können. Auch eine derartige Ausführungsform ist als "mehrteilig" im Sinne der Erfindung zu verstehen. Das Halteteil ist zunächst, in einem Ausgangszustand, in einer Richtung weitgehend senkrecht zur Ebene der Platte bezüglich des Basisteils oder der Platte lose. Die Verbindung mit dem jeweils anderen Element, dem Basisteil oder der Platte, erläutert, beim eigentlichen Anbringen der Platte oder im angebrachten Zustand der Platte ausgebildet. Alternativ kann das Halteteil bezüglich des Basisteils in Richtung senkrecht zur Ebene der Platte festgelegt, jedoch parallel zu einer festzulegenden Plattenkante verschiebbar mit dem Basisteil verbunden sein.

Im Hinblick auf die Verbindung des Halteteils mit dem Basisteil oder der Platte, die beim Anbringen der Platte oder im angebrachten Zustand der Platte erfolgt, sieht die Erfindung mehrere Alternativen vor. Hierbei ist zu erläutern, dass bei Verwendung der erfindungsgemäßen Befestigungsanordnung die Platte üblicherweise zumindest bereichsweise weitgehend senkrecht zu der Tragkonstruktion bewegt wird. Insbesondere wird bevorzugt, dass die Platte an einer Kante durch eine Presspassung mit einer benachbarten Platte verbunden wird, indem die anzubringende Platte um die Verbindungskante mit einer bereits angebrachten Platte verschwenkt wird. Gegen Ende dieser Verschwenkbewegung bewegt sich die verbleibende, festzulegende Plattenkante weitgehend senkrecht zu einer Tragkonstruktion. Im Rahmen dieser Bewegung kann die Platte mit einem entsprechend vorbereiteten Halteteil derart in Eingriff kommen, insbesondere verrastet werden, dass sie nunmehr bezüglich des Halteteils festgelegt ist. Da das Halteteil in diesem Fall in einer Richtung senkrecht zur Oberfläche der Platte bezüglich des Basisteils festgelegt ist, ist die Platte in dieser Richtung fixiert. Da das Basisteil jedoch in einer Richtung senkrecht hierzu bezüglich des Basisteils verschiebbar ist, wird die gewünschte, in dieser Richtung bewegliche Befestigung einer Platte erreicht.

Im übrigen wird für die Platten, die gemäß der Erfindung zu befestigen sind, bevorzugt, dass es sich um die Platten gemäß der WO 02/52113 der Anmelderin handelt. Insbesondere wird hinsichtlich der Verbindung der Platten miteinander sowie der Ausbildung der Platten im einzelnen auf diese Anmeldung Bezug genommen, und die diesbezügliche Offenbarung wird vollinhaltlich zum Gegenstand der vorliegenden Anmeldung gemacht. Ferner wird eine Kombination einer derartigen Platte mit zumindest einer Befestigungsanordnung gemäß der vorliegenden Erfindung zum Gegenstand der Anmeldung gemacht. Im übrigen sei jedoch betont, dass sich die Erfindung für beliebige Platten oder Paneele, insbesondere Gebäudepaneele, für Innen- und Außenflächen eines Gebäudes, sowie zur Verkleidung von neuen Wänden eines Raumes eignet.

Eine erfindungsgemäße Alternative besteht darin, dass das Halteteil im angebrachten Zustand der Platte im Bereich einer Kante derselben in einer Richtung weitgehend senkrecht zu der Kante und von dieser weg verschiebbar ist. In diesem Fall ist das Halteteil in einer Richtung senkrecht zur Ebene der Platte an der Platte festgelegt, jedoch bezüglich des Basisteils zunächst lose. Sobald sich die Platte in ihrem angebrachten Zustand befindet, kann das Halteteil senkrecht zu einer Plattenkante und von dieser weg derart zu dem Basisteil verschoben werden, dass ein Eingriff, insbesondere eine Verrastung mit dem Basisteil erfolgt. Die "Abdeckung" zu der Plattenkante durch einen Abschnitt des Halteteils ist hierbei vorteilhaft so gewählt, dass sie größer ist als der Verschiebeweg des Halteteils. Dieser kann jedoch vergleichsweise klein gehalten werden, da die Verbindung zwischen Halteteil und Basisteil, die vorzugsweise aus Metall ausgeführt sind, im Bereich einer Verrastung von wenigen mm erfolgen kann. Im Endzustand ist das Halteteil dann bevorzugt in einer Richtung senkrecht zu der Plattenkante an dem Basisteil festgelegt. In dieser Richtung ist die Platte jedoch in dem Halteteil beweglich aufgenommen, so dass hier die gewünschte Beweglichkeit der Platte bezüglich des Halteteils und damit bezüglich der Tragkonstruktion vorliegt, und Bewegungen der äußersten Plattenkante infolge von Größenveränderungen des gesamten Plattenverbundes in vorteilhafter Weise aufgenommen werden können.

Die übereinstimmenden Vorteile können durch diejenige erfindungsgemäße Alternative erreicht werden, bei der das Halteteil in einer Richtung parallel zur Kante der Platte verschiebbar ist. Auch in diesem Fall befindet sich das Halteteil im Ausgangszustand an einer Plattenkante und ist bezüglich des Basisteils lose. Nach dem Anbringen der Platte, das üblicherweise durch ein Verschwenken in den angebrachten Zustand erfolgt, kann das Halteteil bezüglich der Plattenkante derart verschoben werden, dass es nunmehr in dem Basisteil festgelegt ist. Im Endzustand hält das Basisteil das Halteteil in einer Richtung senkrecht zur Ebene der Platte, und das Halteteil hält seinerseits die Platte in dieser Richtung. Die Verbindung zwischen Halteteil und der betrachteten Platte in einer Richtung senkrecht zur Plattenkante ist jedoch derart, dass die gewünschte Beweglichkeit erreicht wird.

Parallel zu der Oberfläche kann eine Beweglichkeit verbleiben, so dass hier jegliche Bewegungen, beispielsweise infolge von Feuchtigkeitsveränderungen eines Plattenverbundes, aufgenommen werden können.

Sämtlichen Alternativen der erfindungsgemäßen Befestigungsanordnung ist gemeinsam, dass das Halteteil in dem Endzustand sowohl bezüglich des Basisteils als auch der Platte in einer Richtung senkrecht zur Ebene der Platte festgelegt ist, so dass die Platte im Endzustand in dieser Richtung fixiert ist. In einer Richtung senkrecht zur Kante der Platte erfolgt jedoch eine Festlegung des Halteteils entweder bezüglich der Platte oder des Basisteils, so dass sich die Platte, gegebenenfalls zusammen mit dem Halteteil, bezüglich des Basisteils und damit bezüglich der Tragkonstruktion bewegen kann. Indem diese Bewegungen zugelassen werden, wird die Entstehung von optisch erkennbaren Fugen zwischen einzelnen Platten verhindert, was nicht möglich wäre, wenn jede Platte für sich bezüglich der Tragkonstruktion befestigt wäre. Insgesamt kann mit einfachen Mitteln die Ausbildung einer Verkleidung, die aus mehreren Platten besteht, bzw. eine neue Wand eines Raumes derart realisiert werden, dass ein optisch fugenfreier Plattenverbund erreicht wird, der insbesondere auch im Bereich von Innenecken mit vergleichsweise geringen Fugen befestigbar ist. Der Platzbedarf im Bereich der Innenecken kann durch sämtliche Varianten äußerst gering gehalten werden, und ist insbesondere deutlich kleiner als dies der Fall wäre, wenn ein Halteteil verwendet wird, das in Richtung der Plattenkante verschoben werden muss. Beim Anbringen muss die festzulegende Kante der Platte nämlich lediglich an einem vergleichsweise kurzen, vorstehenden Halteabschnitt des Basisteils vorbeitreten und wird im angebrachten Zustand mittels des unter diesen Halteabschnitt zu verschiebenden Halteteils befestigt. Somit ist der Platzbedarf für die gelenkige Verbindung im Bereich einer Innenecke äußerst gering, so dass die festzulegende Plattenkante ohne weiteres daran vorbeitreten kann, und ein vergleichsweise kleiner Spalt vorgesehen werden muss.

Ebenso gilt dieser Vorteil gegenüber einer denkbaren Vorgehensweise, bei der ein Teil einer Befestigungsanordnung in dem verbleibenden Spalt an einer Innenecke bezüglich der Tragkonstruktion durch Schrauben oder dergleichen festgelegt wird. Darüber hinaus kann die erfindungsgemäße Befestigungsanordnung in vorteilhafter Weise in zwei Richtungen in der Ebene der Platte eine Beweglichkeit realisieren. Hierdurch wird in sämtlichen relevanten Richtungen die Entstehung von Fugen zwischen miteinander verbundenen Platten vermieden. Schließlich besteht der Vorteil, dass durch die erfindungsgemäße Befestigungsanordnung eine sogenannte sichtbare Montage erfolgen kann. Beim Anbringen, insbesondere dem Einschwenken einer Platte, ist das Basisteil bereits an einer Tragkonstruktion festgelegt und stets sichtbar. Das zumindest eine an der Platte verschiebbar angebrachte Halteteil kann derart vorgesehen werden, dass es sich bereits in der Nähe desjenigen Basisteils befindet, mit dem es nachfolgend verbunden, insbesondere verrastet werden soll. Hierdurch wird die Befestigung der Platte erheblich erleichtert und eignet sich insbesondere für wenig geübte "Heimwerker", für welche die erfindungsgemäße Befestigungsanordnung einschließlich der damit anzubringenden Platte insbesondere gedacht ist.

Bevorzugte Ausführungsformen der erfindungsgemäßen Befestigungsanordnung sind in den weiteren Ansprüchen beschrieben. Zu den Einzelmerkmalen der nachfolgend beschriebenen bevorzugten Ausführungsformen der Erfindung ist festzustellen, dass diese in beliebiger Weise miteinander kombiniert werden können. Ferner können sämtliche dieser Merkmale auch ohne die Verwirklichung der Merkmale des Anspruchs 1 ihre Vorteile entfalten, so dass auch eine anders gestaltete, mit einem oder mehreren der nachfolgenden Merkmale versehene Befestigungsanordnung, als Gegenstand der vorliegenden Anmeldung zu sehen ist. Insbesondere gilt dies für eine Befestigungsanordnung für Platten, die mit einem Befestigungsabschnitt für ein Abdeckprofil, einschließlich der bevorzugten Merkmale für einen derartigen Befestigungsabschnitt, versehen ist. Ferner wird als Neuerung angesehen, eine Befestigungsanordnung für Platten mit einem oder mehreren, unterschiedlichen Abdeckprofilen zu kombinieren.

Eine besonders einfache und kostengünstige Gestaltung der Einzelteile der erfindungsgemäßen Befestigungsanordnung kann dadurch realisiert werden, dass das Basis- und/oder Halteteil als Stanz-/Biegeteile aus Blech ausgeführt sind. Derartige Bauteile lassen sich besonders kostengünstig als Massenprodukte fertigen und können gleichzeitig die erfindungsgemäß auszufüllenden Funktionen verlässlich und stets reproduzierbar gewährleisten. Als Material für das Basis- und/oder Halteteil sind jedoch auch Kunststoff und jegliche andere, für die zu erfüllenden Funktionen geeignete, Materialien denkbar.

Für die Festlegung, insbesondere die Verrastung des Halteteils an dem Basisteil, hat es sich bei Versuchen als vorteilhaft erwiesen, wenn das Basisteil zumindest einen hierfür geeigneten Vorsprung aufweist. Da das Halteteil in sämtlichen Richtungen parallel zur Ebene der zu befestigenden Platte beweglich sein kann, wird insbesondere bevorzugt, das Halteteil in zwei senkrechten Richtungen in der Ebene der Platte bezüglich des Basisteils festzulegen oder zu fixieren. Mit anderen Worten wird im festgelegten Zustand verhindert, dass sich das Halteteil ohne Überwindung einer gewissen Rastkraft parallel zu der Plattenkante oder senkrecht hierzu bewegt.

Für das Halteteil bietet es Vorteile, wenn dieses zumindest eine Klemmeinrichtung, insbesondere zumindest eine Federzunge, für eine gewisse Klemmung an der Platte aufweist. Hierdurch kann das Halteteil zu Beginn und während des Anbringvorgangs der Platte mit einer gewissen Klemmkraft an der Platte gehalten wird, so dass es nicht verrutschen kann und beim Anbringen zuverlässig in derjenigen Position verbleibt, in der es bei Abschluss des Anbringvorgangs mit dem Basisteil verrastet werden kann.

Ferner bietet es für die Verbindung, insbesondere die Verrastung zwischen dem Halteteil und dem Basisteil Vorteile, wenn diese mittels zumindest einer Federzunge hergestellt wird. Bei Ausbildung des Halteteils aus Metall oder Kunststoff kann die Federzunge vergleichsweise einfach ausgebildet werden und zuverlässig für eine Verbindung mit dem Basisteil sorgen, die im angebrachten Zustand durch die dabei auftretenden Kräfte nicht ohne weiteres überwunden wird.

Für die Ausführung des Verbindungsvorgangs zwischen dem Halteteil und dem Basisteil, der, wie erwähnt, bevorzugt eine Verschiebung des Halteteils mit sich bringt, ist die Ausbildung zumindest einer Aussparung an dem Halteteil vorteilhaft. In diese Aussparung kann ein Werkzeug, beispielsweise ein Schraubendreher, eingreifen und dazu verwendet werden, die gewünschte Verschiebung vorzunehmen.

Gemäß einer Weiterbildung kann das Basis- und/oder das Halteteil als ein jeweils, verglichen mit der Länge einer festzulegenden Plattenkante, vergleichsweise kurzes Bauteil gestaltet sein. In diesem Fall sind entlang der Plattenkante mehrere Befestigungsanordnungen, bestehend aus Basis- und Halteteil, mit Abstand zueinander angeordnet, um die Plattenkante insgesamt festzulegen. Diese Ausführungsform weist den Vorteil auf, dass der Materialverbrauch vergleichsweise gering ist.

Auch für die alternative Ausführungsform, wonach das Basis- und/oder Halteteil eine ausgedehnte Erstreckung in Richtung der festzulegenden Plattenkante aufweisen, haben Versuche gute Ergebnisse erbracht. Mit anderen Worten ist in diesem Fall das Basis- und/oder das Halteteil als Profil, beispielsweise als Strangpressprofil, ausgebildet und erstreckt sich beispielsweise entlang der gesamten Länge einer festzulegenden Plattenkante oder eines wesentlichen Teils davon. Diese Ausführungsform bietet den Vorteil, dass die Anbringung des Basisteils an der Tragkonstruktion mit geringerem Zeitaufwand erfolgen kann, als dies für mehrere Basisteile erforderlich ist. Es sei erwähnt, dass ein "durchgehendes" Basisteil, das somit eine gewisse Längserstreckung aufweist, mit mehreren vergleichsweise kurzen Halteteilen, die entsprechend für eine punktuelle Festlegung der Plattenkante sorgen, kombiniert werden kann. Ebenso ist die umgekehrte Kombination denkbar, wonach ein durchgehendes Halteteil mit einer gewissen Längserstreckung, das entsprechend eine Plattenkante auf einer gewissen Länge festlegt, mit mehreren kurzen, d.h. punktuell an der Tragkonstruktion befestigenden Basisteilen zusammenwirkt.

Wie vorangehend ausgeführt wurde, eignet sich die erfindungsgemäße Befestigungsanordnung insbesondere für die Befestigung einer "letzten" Platte im Bereich einer Innenecke eines Raumes. Da ein gewisser Spalt zwischen der Kante der "letzten" Platte und einer daran, beispielsweise unter einem Winkel von 90° angrenzenden Wand unvermeidbar ist, wird für das Basis- und/oder das Halteteil der Befestigungsanordnung bevorzugt, dass dieses einen Befestigungsabschnitt zur Anbringung eines Abdeckprofils aufweist. Hierdurch kann in einfacher und kostengünstiger Art und Weise eine Vorkehrung dafür getroffen werden, das auch der unvermeidbare Spalt in optisch ansprechender Art und Weise durch ein Abdeckprofil abdeckbar ist, das in vorteilhafter Weise an einem Bestandteil der Befestigungsanordnung anbringbar ist.

Für den an dem Halte- und/oder dem Basisteil ausgebildeten Befestigungsabschnitt zur Anbringung eines Abdeckprofils wird bevorzugt, dass dieser zumindest eine Federzunge aufweist. Hierdurch kann eine Klemmung des Abdeckprofils ausgebildet werden, die für einen sicheren Verbleib des Abdeckprofils an der erfindungsgemäßen Befestigungsanordnung sorgt.

Dem entsprechend wird im Rahmen der Erfindung eine Weiterbildung dahingehend bevorzugt, dass eine Kombination zumindest einer Befestigungsanordnung mit zumindest einem Abdeckprofil vorgesehen wird.

Für das Abdeckprofil wird zur Erzielung einer guten Optik bevorzugt, dass dieses eine Breite aufweist, die etwas mehr als die ein- oder zweifache Breite der an der Plattenoberseite sichtbaren Abschnitte der Befestigungsanordnung aufweist. Insbesondere kann das Abdeckprofil auch etwas mehr als die Breite eines Abschnitts des Basisteils aufweisen, an den die Plattenkante bei dem Einschwenken einer Platte vorbeibewegt werden muss. Ein Abdeckprofil, das die zweifache Breite der an der Plattenoberseite sichtbaren Abschnitt der Befestigungsanordnung aufweist, ist für eine Situation geeignet, bei der an einen Verbund mehrerer Platten, beispielsweise nach einer erforderlichen Dehnungsfuge, ein weiterer derartiger Verbund angeschlossen wird, und die Dehnungsfuge mit dem Abdeckprofil abzudecken ist. Es sei betont, dass es sich bei dieser Gestaltung des Abdeckprofils lediglich um eine Möglichkeit handelt, um die darunter liegende Befestigungsanordnung abzudecken. Alternativ kann es jedoch in bestimmten Anwendungsfällen erwünscht sein, das Abdeckprofil deutlich breiter und/oder auffälliger, beispielsweise auch als Stuckleiste, auszuführen, um an einer mit Platten verkleideten Wand optische Akzente zu setzen. Durch derartige voluminöse Abdeckleisten können dementsprechend gewollte Gestaltungselemente realisiert werden.

In vorteilhafter Weise kann das Abdeckprofil zwei Abdeckabschnitte aufweisen, die winkelig miteinander verbunden sind. Hierdurch kann das Abdeckprofil so gestaltet werden, dass es sich für eine Innen- oder Außenecke eignet. Bevorzugt sind die beiden Abdeckabschnitte flexibel miteinander verbunden, so dass ein derartiges Abdeckprofil für verschiedene Winkel von Ecken, insbesondere von Innenecken, einsetzbar ist.

Eine besonders vorteilhafte Kombination mehrerer Befestigungsanordnungen mit mehreren Abdeckprofilen wird dann erreicht, wenn mehrere, verschiedene Abdeckprofile vorgesehen werden. Hierbei tritt der Vorteil der erfindungsgemäßen Befestigungsanordnung zutage, dass diese in unveränderter Form für verschiedenste Situationen, beispielsweise die Befestigung angrenzend an Dehnungsfugen, sowie an Innen- oder Außenecken verschiedenster Winkel, in unveränderter Form einsetzbar ist. Durch das Vorsehen verschiedener Abdeckprofile kann eine Abdeckung der jeweils verbleibenden Spalte und Fugen in sämtlichen der genannten Situationen erfolgen.

Die Lösung der o.g. Aufgabe erfolgt ferner durch ein Verfahren zur Befestigung einer Platte an einer Tragkonstruktion, das folgende Schritte aufweist. Zunächst wird ein Basisteil an einer Tragkonstruktion befestigt. Ferner wird ein Halteteil vorgesehen, das bezüglich des Basisteils oder der Platte lose ist oder um eine Achse weitgehend parallel zu einer festliegenden Plattenkante gelenkig mit diesem verbunden ist. Nachfolgend wird die Platte in eine Anbringposition geschwenkt oder weitgehend senkrecht zu ihrer Oberfläche in diese bewegt.

Nach dem Anbringen der Platte kann ein Verschieben des Halteteils in einer Richtung weitgehend senkrecht zu der Kante der Platte und von dieser weg oder parallel zur Kante der Platte und/oder ein Verschwenken des Halteteils um eine Achse weitgehend parallel zu der Kante erfolgen, so dass hierdurch die Verbindung mit der Platte oder dem Basisteil in einer Richtung senkrecht zur Ebene der Platte erfolgt. Wie vorangehend im Hinblick auf die gegenständlichen Merkmale der erfindungsgemäßen Anordnung ausgeführt, kann hierbei die Festlegung des Halteteils bezüglich der Platte derart erfolgen, dass es senkrecht zu einer festzulegenden Plattenkante entweder bezüglich der Platte oder des Basisteils festgelegt ist, so dass in dieser Richtung auch im angebrachten Zustand der Platte Bewegungen zugelassen werden. Hierdurch kann in vorteilhafter Weise die Befestigung von Platten derart erfolgen, dass bei einem Verbund mehrerer Platten die Entstehung von optisch erkennbaren Fugen zwischen einzelnen Platten vermieden wird.

Bevorzugte Weiterbildungen des erfindungsgemäßen Verfahrens sind in den weiteren Ansprüchen beschrieben.

Bevorzugt erfolgt die Verschiebung des Halteteils mittels eines Werkzeugs, insbesondere eines Schraubendrehers. Zu diesem Zweck weist das Halteteil eine geeignete Aussparung auf.

Um verbleibende Spalte, beispielsweise zwischen der "letzten" Platte einer Wand und einer daran an einer Innenecke angrenzenden Wand, sowie diejenigen Abdecke des Halteteils, welche die Plattenkante umgreifen, abzudecken, wird bevorzugt, abschließend an das Basis- und/oder das Halteteil ein Abdeckprofil anzubringen.

### KURZE BESCHREIBUNG DER ZEICHNUNGEN

Nachfolgend wird die Erfindung anhand von beispielhaft in den Zeichnungen dargestellten Ausführungsformen näher erläutert. Es zeigen:
- Fig.1: eine perspektivische Ansicht des Basisteils der erfindungsgemäßen Befestigungsanordnung;
- Fig.2: eine Draufsicht auf das Halteteil der erfindungsgemäßen Befestigungsanordnung;
- Fig.3: eine Seitenansicht des in Fig. 2 gezeigten Halteteils;
- Fig.4: eine perspektivische Ansicht des mit dem Basisteil verbundenen Halteteils;
- Fig.5: eine perspektivische Ansicht der Situation gegen Ende des Befestigungsvorgangs einer Platte;
- Fig.6: eine perspektivische Ansicht der fertiggestellten Befestigungsanordnung;
- Fig.7a-e: verschiedene Kombinationen einer oder mehrerer Befestigungsanordnungen mit verschiedenen Abdeckprofilen;
- Fig.8-10: perspektivische Ansichten weiterer Ausführungsformen und Beispiele der erfindungsgemäßen Befestigungsanordnung (es gibt keine Fig. 11);
- Fig. 12: eine Draufsicht auf eine mit der erfindungsgemäßen Befestigungsanordnung zu kombinierende Klammer; und
- Fig.13: eine Schnittansicht durch die in Fig. 12 gezeigte Klammer.

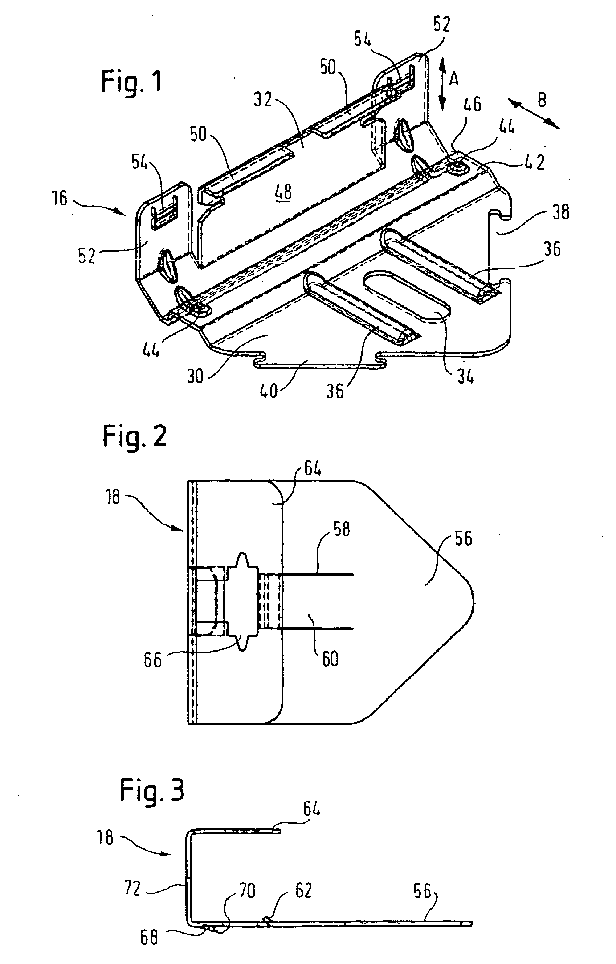

Das in Fig. 1 perspektivisch gezeigte Basisteil 16 einer bevorzugten Ausführungsform der erfindungsgemäßen Befestigungsanordnung weist zum einen einen Basisabschnitt 30 und einen Halteabschnitt 32 auf. Mit dem Basisabschnitt 30 ist das Basisteil 16 an einer (nicht gezeigten) Tragkonstruktion derart anbringbar, dass sich der Halteabschnitt 32 weitgehend senkrecht von der Tragkonstruktion und ebenfalls weitgehend senkrecht zu der Ebene einer anzubringenden (nicht gezeigten) Platte erstreckt. Die Befestigung des Basisteils 16 an der Tragkonstruktion erfolgt üblicher Weise durch eine Schraube, die in ein bei der dargestellten Ausführungsform vorhandenes Langloch 34 eingedreht und an der Tragkonstruktion befestigt wird. Um die Position des Basisteils 16 bezüglich der Tragkonstruktion auch während des Eindrehens der Schraube anpassen zu können, ist die Öffnung als Langloch ausgebildet. Die Ausbildung als Langloch erfüllt darüber hinaus den Zweck, dass auch hier Bewegungen zugelassen werden können, die sich dann einstellen, wenn, wie vorangehend ausgeführt, ein Verbund mehrerer miteinander verbundener Platten im montierten Zustand in Folge von Quellen oder Schwinden seine Größe verändert, und sich einzelne Platten dementsprechend bewegen. Es hat sich gezeigt, dass derartige Bewegungen auch durch die Bewegung des Basisteils bezüglich der Tragkonstruktion, die infolge des Langlochs möglich sind, aufgenommen werden. Seitlich neben dem Langloch sind zwei Sicken 36 vorhanden, um eine Auflagefläche oberhalb eines Schraubenkopfes zu bilden, der sich im montierten Zustand im Bereich des Langlochs befindet. Wenngleich die Platte in erster Linie auf dem nachfolgend erläuterten Steg 42 aufliegen wird, wird durch die Sicken sichergestellt, dass die Anordnung einer zu montierenden Platte durch den Schraubenkopf nicht behindert wird. Zusätzlich dienen die Sicken 36 als Verstärkung des Basisabschnitts 30. Schließlich ist der Basisabschnitt 30 des Basisteils 16 weitgehend dreieckförmig gestaltet, wobei die eine Seite eine Aussparung 38, und die andere Seite einen komplementär geformten Vorsprung 40 aufweist. Hierdurch können zwei der gezeigten Basisteile 16 "über Eck" miteinander verbunden werden, um beispielsweise die Ecke einer Platte an einer Raumecke festzulegen und gleichzeitig dafür zu sorgen, dass zwei, in den jeweiligen Befestigungsanordnungen montierte Abdeckprofile, die nachfolgend noch genauer erläutert sind, mit einem Winkel von exakt 90° zueinander angeordnet sind. Eine ähnliche Situation tritt bei Platten auf, die sich am Rand einer Wand befinden und darüber hinaus an eine hierzu senkrecht verlaufende, zu weiteren Platten abgrenzende Dehnungsfuge angrenzen. Auch hierdurch können in vorteilhafter Weise durch die Verbindung von zwei Befestigungsanordnungen "über Eck" zwei Abdeckprofile zuverlässig mit einem 90° Winkel zueinander angeordnet werden. Bei dieser Kombination aus Aussparung 38 und komplementär geformtem Vorsprung 40 an dem Basisabschnitt handelt es sich um ein weiteres, bevorzugtes Merkmal der erfindungsgemäßen Befestigungsanordnung.

Zwischen dem Basisabschnitt 30 und dem Halteabschnitt 32 ist ein weitgehend U-förmiger Steg 42 vorhanden, der sich von dem Niveau des Basisabschnitts 30 erhebt. Bei der gezeigten Ausführungsform sind an den seitlichen Rändern des Steges 42 zwei in dem gezeigten Fall weitgehend kreis- oder kegelförmige Vorsprünge 44 vorgesehen, die sich nach oben, also in Richtung der Erstreckung des Halteabschnitts 32, erstrecken. Diese Vorsprünge 44 dienen, wie nachfolgend noch genauer gezeigt wird, der Verhinderung, dass sich ein mit dem Basisteil 16 verrastetes Halteteil in der Richtung der Erstreckung des Steges 42 von dem Basisteil 16 löst. Zu derjenigen Kante 46 des Steges 42, die sich näher an dem Halteabschnitt 32 befindet, sei angemerkt, dass hier bei der gezeigten Ausführungsform die Verrastung mit dem nachfolgend noch erläuterten Halteteil erfolgt. Insbesondere erfolgt hier die Festlegung des Halteteils in einer Richtung B weitgehend senkrecht zu der Kante einer festzulegenden Platte.

In der Richtung A senkrecht zur der Ebene einer festzulegenden Platte wird das Halteteil bezüglich des Basisteils 16 durch den Halteabschnitt 32 fixiert. Dieser erstreckt sich zum einen in Form einer "Rückwand" 48 zunächst in Richtung A. An dem oberen Ende dieser Rückwand 48 sind bei der gezeigten Ausführungsform zwei vorstehende Laschen 50 ausgebildet, unter welche bei dem Vorgang der Fixierung des Halteteils bezüglich des Basisteils 16 das Halteteil gewissermaßen geschoben wird. Hierdurch wird im angebrachten Zustand verhindert, dass sich das Halteteil in einer Richtung A von dem Basisteil löst.

Bei der gezeigten Ausführungsform sind an beiden Seiten seitlich neben dem Halteabschnitt 32 Befestigungsabschnitte 52 für die Anbringung eines Abdeckprofils ausgebildet. Jeder dieser Befestigungsabschnitte weist eine Federzunge 54 auf, die dadurch ausgebildet ist, dass im wesentlichen die Form eines U gestanzt oder beispielsweise mit dem Laser geschnitten wird, und die innerhalb des U liegende Zone zumindest geringfügig in Richtung des Halteabschnitts 32 verformt wird. Hierdurch wird eine klemmende Anbringung eines Abdeckprofils erreicht. Dieses kann, wie nachfolgend noch genauer erläutert, mit einem Steg zwischen die Befestigungsabschnitte 52 und den Halteabschnitt 32 eingesteckt werden, und wird im angebrachten Zustand zwischen diesen Abschnitten und insbesondere durch die mittels der Federzungen 54 aufgebrachte Klemmkraft zuverlässig gehalten.

In Fig. 2 ist in einer Draufsicht das mit dem in Fig. 1 gezeigten Basisteil 16 zu verbindende Halteteil 18 gezeigt. Dieses weist, wie genauer aus Fig. 3 hervorgeht, im wesentlichen die Form einer U-förmigen Klammer mit einer etwas verlängerten Basis 56 auf. In der Basis 56 ist bei der gezeigten Ausführungsform im wesentlichen durch Ausbildung eines U-förmigen Schlitzes 58 eine Federzunge 60 vorgesehen, die an ihrem freien Ende 62 (vgl. Fig. 3) zumindest geringfügig in das Innere der Klammer verformt ist. Hierdurch kann das Halteteil 18 in zuverlässiger Art und Weise an die Kante einer Platte geklemmt werden, die innerhalb der Klammer aufgenommen wird. In dem Oberteil 64 (vgl. Fig. 3) des Halteteils 18 ist bei der gezeigten Ausführungsform eine Aussparung 66 vorhanden, in die beispielsweise ein Schraubendreher eingeführt werden kann. Der Schraubendreher kann bei dem Vorgang, bei dem das Halteteil 18 in Richtung des Halteabschnitts 32 des Basisteils 16 verschoben wird, mit seinem vorderen Ende an der Stirnseite der Platte abgestützt werden und durch eine Hebelbewegung in Richtung des Halteabschnitts 32 für die erforderliche Verschiebung des Halteteils 18 unter die vorstehenden Laschen 50 des Basisteils 16 sorgen.

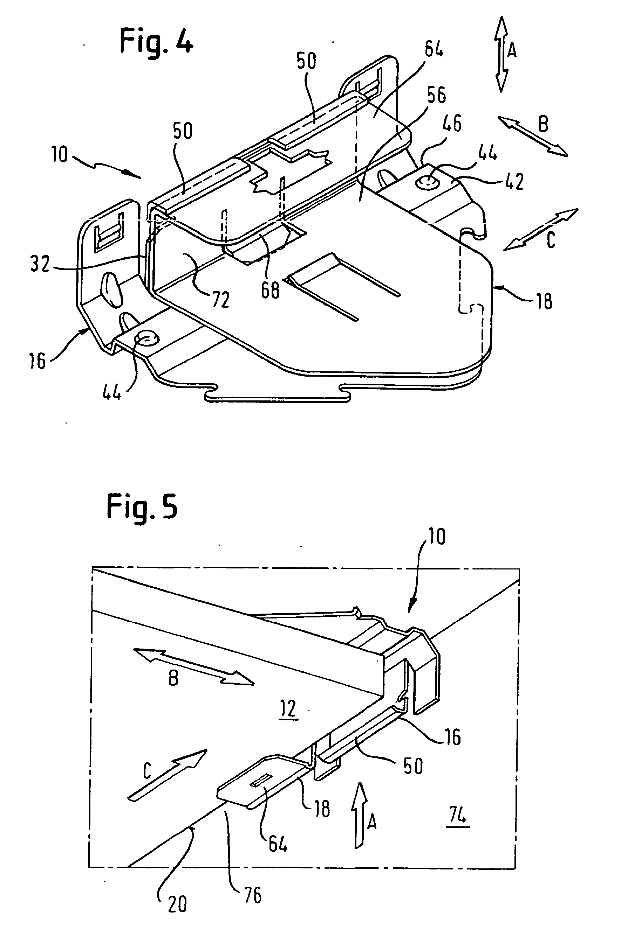

Schließlich ist, wie am besten n Fig. 3 zu erkennen, im Bereich des inneren Endes der Basis 56 des Halteteils 18 eine weitere Federzunge 68 ausgebildet, deren freies Ende 70 sich zumindest geringfügig von der Basis 56 nach unten erstreckt. Der auch in diesem Fall U-förmige Schnitt, der für die Ausbildung der Federzunge 68 sorgt, ist bei der gezeigten Ausführungsform derart vorgesehen, dass er sich auch im Bereich des Verbindungssteges 72 des Halteteils 18 erstreckt. In Fig. 4 ist in einer perspektivischen Ansicht der verbundene Zustand des Basisteils 16 und des Halteteils 18 der erfindungsgemäßen Befestigungsanordnung 10 gezeigt. In diesem Zustand liegt das Halteteil 18 mit seiner Basis 56 auf der Oberseite des Steges 42 des Basisteils 16 auf. Das in Richtung des Steges 42 vorstehende freie Ende 70 der rückwärtigen Federzunge 68 des Halteteils 18 befindet sich unmittelbar hinter der rückwärtigen Kante 46 des Steges und ist an dieser verrastet. Mit seiner Oberseite 64 ist das Halteteil 18 derart unter die vorstehenden Laschen 50 des Basisteils 16 geschoben, dass es sich in der Richtung A nicht von dem Basisteil 16 lösen kann. Bei der gezeigten Ausführungsform sind die Größenverhältnisse ferner derart, dass der Verbindungssteg 72 des Halteteils 18 an dem Halteabschnitt 32 des Basisteils anliegt.

Bei der gezeigten Ausführungsform erfolgt die Verschiebung des Halteteils 18 für dessen Festlegung an dem Basisteil 16 in der Richtung B und in Richtung des Halteabschnitts 32 des Basisteils 16. Da das freie Ende 70 der Federzunge 68 zumindest geringfügig nach unten vorsteht, muss es bei dieser Verschiebebewegung über den Steg 42 gelangen und wird hierzu zumindest geringfügig nach oben ausgelenkt. Durch die federnde Eigenschaft der Federzunge 68 kehrt diese jedoch, nachdem sie an der hinteren Kante 46 vorbeigetreten ist, in ihren Ausgangszustand zurück. Bei dem Abgleiten der Federzunge 68 in diesem Bereich des Steges 42 und insbesondere bei der Rückkehr der Federzunge 68 in ihren Ausgangszustand ist ein "Klicken" zu hören. Dieses signalisiert dem Monteur, dass das Halteteil seinen gewünschten Endzustand erreicht hat. In diesem Endzustand ist das Halteteil 18 in der Richtung A bezüglich des Basisteils 16 festgelegt. Auch in der Richtung B erfolgt eine Festlegung, die nur durch Überwindung der Rastkraft der Federzunge 68 aufgehoben werden kann. Entsprechende Kräfte treten jedoch im angebrachten Zustand einer Platte nicht auf. Die Platte ist innerhalb der durch das Halteteil 18 gebildeten gebildeten Klammer in der Richtung C beweglich, jedoch durch die Oberseite 64 des Halteteils 18 in der Richtung A fixiert. Durch die Beweglichkeit in der Richtung B können jegliche Verschiebungen einer durch die gezeigte Befestigungsanordnung 10 festgelegte Platte, die auch infolge von Feuchtigkeitsveränderungen eines gesamten Plattenverbundes auftreten können, aufgenommen werden. Schließlich wird durch die Vorsprünge 44 an der Oberseite des Steges verhindert, dass sich das Halteteil 18 unbeabsichtigt in der Richtung C von dem Basisteil löst.

In Fig.5 ist in einer perspektivischen Ansicht eine Ausführungsform der erfindungsgemäßen Befestigungsanordnung 10 gezeigt, bei der die Verbindung zwischen dem Halteteil 18 und dem Basisteil 16 durch eine Verschiebung in dieser Richtung C, also parallel zu der Kante 20 einer festzulegenden Platte 12, erfolgt. Ferner ist in Fig.5 eine Situation gezeigt, bei der die erfindungsgemäße Befestigungsanordnung 10 für die Anbringung einer Deckenplatte verwendet wird. Es ergeben sich jedoch keine wesentlichen Unterschiede für die Anbringung einer Wand- oder sogar einer Fußbodenplatte oder eines -paneels.

Das Verfahren zur Befestigung der Platte 12 verläuft im wesentlichen so, dass mehrere Basisteile 16 entlang einer weitgehend geraden Linie angebracht werden. Nachfolgend werden ebenso viele Halteteile 18 an der Plattenkante 20 festgeklemmt. Diese Klemmung erfolgt in vorteilhafter Weise in der Nähe desjenigen Bereichs, in dem sich das jeweilige Basisteil 16 befindet, so dass, nachdem sich die Platte 12 in ihrer endgültigen Position befindet, lediglich ein geringer Verschiebeweg des Halteteils 18 erforderlich ist. Wie vorangehend bereits erwähnt, wird die Platte 12 um die in der Fig. 5 nicht zu erkennende, zu der Kante 20 parallele Kante eingeschwenkt, so dass sich die dargestellte Kante 20 der Platte 12 gegen Ende dieses Vorgangs weitgehend in der Richtung A bewegt. Hierbei muss die Kante 20 der Platte an den vorstehenden Laschen 50 des Basisteils 16 vorbeitreten. Diese können jedoch vergleichsweise kurz ausgeführt werden, so dass inzwischen der Platte 12 und einer beispielsweise senkrecht hierzu verlaufenden Wand 74 ein vergleichsweise geringer Spalt 76 verbleibt.

Am Ende des Anbringvorganges wird, wenn die Platte 12 die in Fig.5 gezeigte Position erreicht hat, das Halteteil 8 in der Richtung C bezüglich des Basisteils 16 verschoben. Hierdurch gelangt das Halteteil 18 mit seinem sogenannten Oberteil 64 unter die vorstehenden Laschen 50 und ist nachfolgend in der Richtung A bezüglich des Basisteils 16 festgelegt. Ferner wird die Platte durch das Oberteil 64 des Halteteils 18 ebenfalls in dieser Richtung fixiert, so dass sie zuverlässig an der Decke, in anderen Fällen an einer Wand oder auf dem Fußboden, hält. In der Richtung B, also senkrecht zu der Plattenkante, ist die Platte 12 jedoch beweglich in dem Halteteil 8 aufgenommen, so dass hier in vorteilhafter Weise eine Bewegung der Platte 12 zugelassen wird. Zu der Ausführungsform von Fig. 5 sei noch angemerkt, dass die Festlegung des Halteteils 18 bezüglich des Basisteils 16 sowohl in der Richtung C als auch in der Richtung B in ähnlicher Weise erfolgen kann, wie dies für die Ausführungsform der Fig. 1-4 beschrieben wurde. Für diese Ausführungsform gilt jedoch, ebenso für alle vorangehend und nachfolgend beschriebenen Ausführungsformen, dass die Platte zusätzlich in vorteilhafter Weise in der Richtung C beweglich in dem Halteteil 18 und damit in der Befestigungsanordnung 10 insgesamt aufgenommen sein kann.

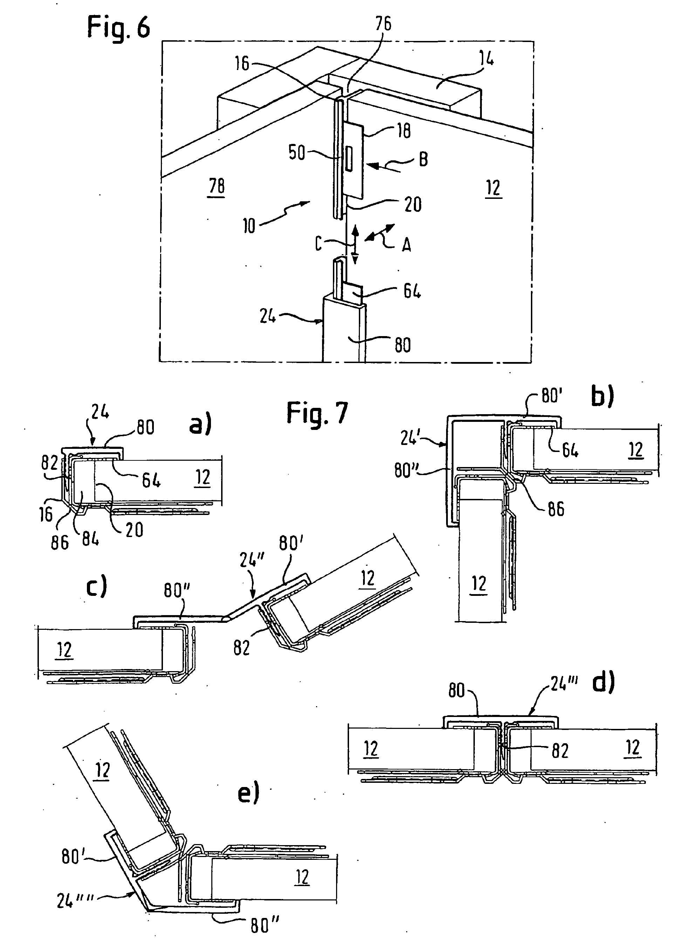

In Fig.6 ist die erfindungsgemäße Befestigungsanordnung 10 in ihren Endzustand in der Situation an einer Innenecke eines Raumes gezeigt. Hier besteht die Besonderheit, dass, wie auch in Fig. 5 erkennbar, zwischen einer zu befestigenden Platte 12 und einer bereits vorhandenen, sich beispielsweise unter einem rechten Winkel hierzu erstreckenden Platte 78 oder einer Wand 74 (vgl. Fig. 5) ein vergleichsweise geringer Spalt 76 verbleiben soll. Dieser Spalt 76 muss insbesondere kleiner gehalten werden, als es dafür erforderlich wäre, dass in diesem Spalt die Festlegung des Halteteils 18 unmittelbar an der Tragkonstruktion 14 erfolgen kann. Mit anderen Worten ist es nicht möglich, durch diesen Spalt 76 eine Schraube einzudrehen, durch welche das Halteteil 18 unmittelbar an der Tragkonstruktion 14 befestigt wird. Durch die erfindungsgemäße Befestigungsanordnung kann jedoch, wie vorangehend unter Bezugnahme auf die Fig.5 ausgeführt, dieser Spalt 76 so klein gehalten werden, wie die Lasche 50 vorsteht. An dieser Lasche 50 tritt die Plattenkante 20 bei ihrer Bewegung in der Richtung A vorbei. Nachfolgend erfolgt die Fixierung des getrennten Halteteils 18 bezüglich des Basisteils 16, das vorangehend an der Tragkonstruktion 14 angebracht wurde, entweder (vgl. Fig. 5) in der Richtung C oder in der Richtung B.

In Fig.6 ist ergänzend ein Abdeckprofil 24 gezeigt, das, wie nachfolgend noch genauer erläutert, in vorteilhafter Weise mit der erfindungsgemäßen Befestigungsanordnung 10 kombiniert werden kann. Dieses weist einen sich parallel zur Ebene der Platte 12 erstreckenden Abdeckabschnitt 80 auf, der so bemessen ist, dass er das Oberteil 64 des Halteteils 18 abdeckt. Hierdurch kann eine auch in diesem Bereich optisch ansprechende Befestigung erreicht werden. Es versteht sich, dass sich das Abdeckprofil 24 über die gesamte Länge der Plattenkante 20 erstreckt, und in Fig. 6 lediglich deshalb verkürzt dargestellt ist, um die darunter liegende Befestigungsanordnung 10 zu zeigen.

Wie in den Fig. 7a-e erkennbar ist, kann ein und dieselbe Befestigungsanordnung 10 in vorteilhafter Weise mit weiteren Befestigungsanordnungen und verschiedensten Abdeckprofilen kombiniert werden, um sämtlichen Situationen, in denen eine Abdeckung erfolgen muss, Rechnung zu tragen. In Fig. 7a ist die Grundsituation gezeigt, in der das Abdeckprofil 24 mit seinem Steg 82 an dem Basisteil 16 zwischen dessen Halteabschnitt 32 und den seitlichen Befestigungsabschnitten 52 (vgl. Fig. 1) befestigt ist. Der Abdeckabschnitt 80 deckt das Oberteil 64 des Halteteils 18 ab. Für eine optisch ansprechende Erscheinung ist er zusätzlich an seinem vorderen Ende derart abgewinkelt, dass das freie Ende sicher auf der Platte 12 aufliegt. In Fig. 7a ist im übrigen ergänzend zu erkennen, wie zwischen der Plattenkante 20 und der Befestigungsanordnung 10 ein Zwischenraum 84 vorliegt, innerhalb dessen sich die Platte 12 bewegen kann.

Aus Fig. 7b geht hervor, wie zwei der erfindungsgemäßen Befestigungsanordnungen mit einem speziellen Abdeckprofil in vorteilhafter Weise für die Verkleidung einer sogenannten Außenecke verwendet werden können. Hierbei werden zwei Platten 12 im wesentlichen "über Eck" angeordnet und der von den Platten 12 eingeschlossene Winkel von 90° deckt die Ecke einer bestehenden Wand, die zu verkleiden ist, oder die Ecke einer Tragkonstruktion, mittels derer eine neue Wand auszubilden ist, ab. An der Außenseite ist dementsprechend ein Winkel von 270° zu verkleiden. Dies erfolgt in vorteilhafter Weise durch ein Abdeckprofil 24', das einen ersten Abdeckabschnitt 80' aufweist, der eine Seite besitzt, die in etwa der Breite des sogenannten Oberteils 64 des Halteelements plus der Dicke der Platte 12 entspricht. An diesen ersten Abdeckabschnitt 80' schließt sich ein damit unter einem Winkel von weitgehend 90° verbundener zweite Abdeckabschnitt 80" an, der in dem gezeigten Fall ebenfalls die genannte Breite aufweist. Hierdurch können an der Außenecke sämtliche Abschnitte der Befestigungsanordnung 10 sowie zu verdeckende Plattenränder abgedeckt werden.

Besonders vorteilhaft ist, dass in dieser Situation zwei identische Befestigungsanordnungen 10 verwendet werden können. Durch die Ausgestaltung der erfindungsgemäßen Befestigungsanordnung 10 ist somit eine Vereinheitlichung der Teile einschließlich der dadurch erreichbaren wirtschaftlichen Vorteile möglich. Zu diesem Zweck ist der Bereich zwischen dem Basisabschnitt 30 des Basisteils und dem Halteabschnitt 32 durch einen Steg 86 (vgl. Fig. 7a) verbunden, der zu den beiden vorangehend genannten Abschnitten unter einem Winkel von weitgehend 45° verläuft. Dieser Steg ist insbesondere zwischen dem Steg 42 (vgl. Fig. 1) und dem Halteabschnitt 32 ausgebildet. Eine Außenecke kann, wie in Fig. 7b gezeigt, in vorteilhafter Weise dadurch zum einen mit den Platten 12 versehen und zum anderen mit dem Abdeckprofil 24' abgedeckt werden, indem die beiden Befestigungsanordnungen 10 mit ihren jeweiligen Stegen 86 aneinander anliegend angebracht werden.

In Fig. 7c ist die entsprechende Situation an einer sogenannten Innenecke gezeigt. Auch hier kann die jeweils letzte Platte 12 an der Innenecke mit identischen Befestigungsanordnungen 10 befestigt werden. Durch ein besonders Abdeckprofil 24" kann die Innenecke abgedeckt werden, indem es mit seinem Steg 82 im Berech des Befestigungsabschnitts einer der Befestigungsanordnungen eingesetzt wird. Ein erster Abdeckabschnitt 80' ist hierbei gelenkig, beispielsweise mittels eines Filmscharniers, mit einem zweiten Abdeckabschnitt 80" verbunden, so dass die gezeigte Kombination von Befestigungsanordnungen und Abdeckprofil 24' für verschiedene Situationen und Winkel im Bereich von Innenecken anwendbar ist.

Fig. 7d zeigt ein Abdeckprofil 24"', das für die Situation vorgesehen ist, wenn zwei Platten 12 in einer Ebene aneinander angrenzend nebeneinander mittels der erfindungsgemäßen Befestigungsanordnung anzubringen sind. Dies kann beispielsweise bei einer gewissen Fläche eines Plattenverbundes bestehend aus mehreren Platten 12 erforderlich werden, um eine Dehnungsfuge vorzusehen. Das Abdeckprofil 24"' mit einem entsprechend verbreiterten Abdeckabschnitt 80 wird wie die vorangehenden Varianten mit seinem Steg 82 in den Befestigungsabschnitt eines der beteiligten Befestigungsanordnungen 10 eingedrückt. Schließlich ergibt sich aus Fig. 7e die Situation im Bereich einer Außenecke (vgl. auch Fig. 7b), die einen anderen Winkel als 90° aufweist. In diesem Fall ist an dem hierfür geeigneten Abdeckprofil 24"" wiederum ein erster Abdeckabschnitt 80' gelenkig, beispielsweise mittels eines integralen Filmscharniers, d.h. einer Ausdünnung des verwendeten Kunststoffs, mit einem zweiten Abdeckabschnitt 80" verbunden. Hierdurch können sämtliche Elemente, die von der Außenseite nicht sichtbar sein sollen, zuverlässig abgedeckt werden. Zu den Abdeckprofilen ist noch festzustellen, dass diese bevorzugt aus Kunststoff bestehen und mit einer Färbung versehen sein können, die der Farbe der anzubringenden Platten 12 entspricht.

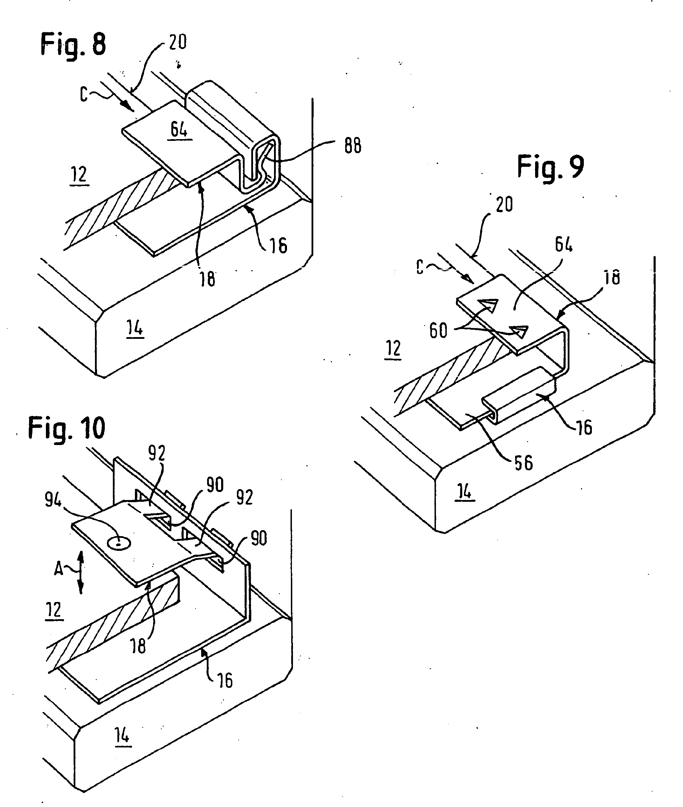

In den Fig. 8-10 sind Modifikationen der erfindungsgemäßen Befestigungsanordnung 10 gezeigt. Bei der Ausführungsform von Fig. 8 weist das Basisteil 16 im Querschnitt gesehen weitgehend die Form eines "P" auf. Das Halteteil 18 kann angebracht werden, nachdem die Platte 12 in ihre endgültige Position gebracht wurde. Zur Festlegung des Halteteils 18 an dem Basisteil 16 wird dieses "neben" dem Basisteil 16 angeordnet. Anschließend wird es in einer Richtung C parallel zur Plattenkante 20 derart verschoben, dass es an dem Basisteil 16 festgelegt ist. Dies erfolgt dadurch, dass ein Abschnitt 88 gewissermaßen in den Hohlraum des "P" des Basisteils 16 eingeführt wird, und das Oberteil 64 des Halteteils nachfolgend die Platte 12 fixiert.

Bei der Ausführungsform von Fig. 9 sind sowohl das Basis- 16 als auch das Halteteil 18 als Klammern gestaltet. Die Klammer des Basisteils 16 ist hierbei derart geformt, dass die Basis 56 des Halteteils 18 im Rahmen der Verschiebung in Richtung C aufgenommen werden kann, indem die Basis umgriffen wird. Hierdurch wird das Halteteil 18 bezüglich des Basisteils 16 festgelegt, so dass in diesem angebrachten Zustand die Platte 12 mittels des Oberteils 64 des Halteteils fixiert wird. Bei dieser Ausführungsform muss, anders als bei der Ausführungsform von Fig.8 und in Übereinstimmung mit den Ausführungsformen der Fig.1-6, das Halteteil 18 vor dem Einschwenken der Platte 12 an der Plattenkante 20 angebracht werden. Um hier eine gewisse Klemmung zu erreichen, sind in dem gezeigten Fall zwei weitgehend dreieckförmige Federzungen 60 vorhanden.

Bei der Ausführungsform von Fig. 10 stellt sich das Basisteil 16 als Befestigungswinkel dar, der in dem gezeigten Fall zwei Aussparungen 90 aufweist. Nachdem die Platte in ihre endgültige Position gebracht wurde, greifen in diese Aussparungen Schenkel 92 des Halteteils 18 ein, so dass das Halteteil in der Richtung A senkrecht zur Platte fixiert ist. Indem das Halteteil 18 im gezeigten Fall mittels einer Schraube 94 an der Platte 12 festgelegt wird, wird auch die Platte in dieser Richtung zuverlässig gehalten.

Bei der Ausführungsform von Fig. 10 ist noch als Unterschied zu den anderen Ausführungsformen festzustellen, dass die Bewegung der Platte 12 bezüglich der Tragkonstruktion 14 derart zugelassen wird, dass sich die Platte 12 zusammen mit dem Halteteil 18 bezüglich des Basisteils 16 bewegen kann, das an der Tragkonstruktion 14 festgelegt ist.

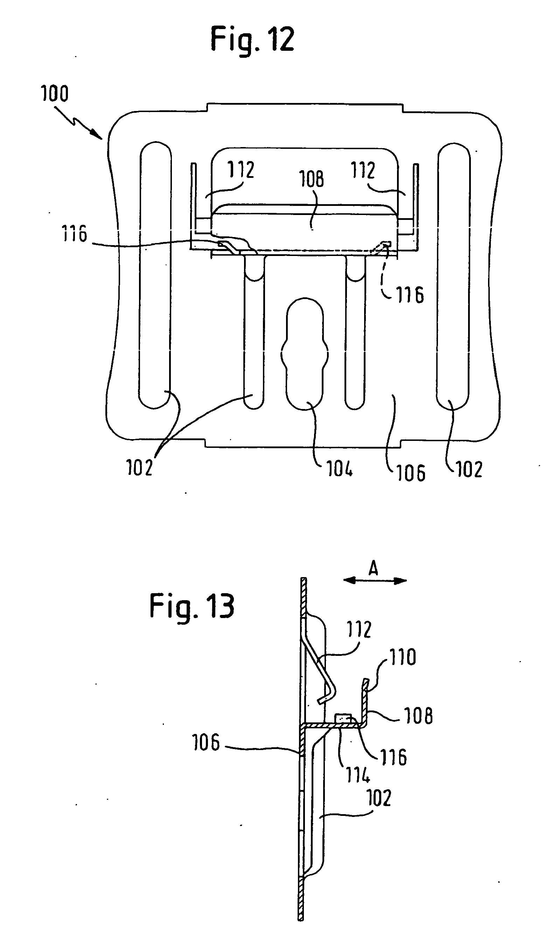

In Fig. 12 ist schließlich eine sogenannte Mittelklammer 100 gezeigt, die zur Befestigung einer Platte 12 in vorteilhafter Weise mit der erfindungsgemäßen Befestigungsanordnung 10 kombiniert werden kann. Zu dieser Mittelklammer 100 ist vorab festzustellen, dass sie, wenngleich sie mit der erfindungsgemäßen Befestigungsanordnung 10 kombiniert werden kann, grundsätzlich von dieser unabhängig ist und unabhängig von dieser ihre Vorteile, wie nachfolgend erläutert, bei der Befestigung von Platten, insbesondere von beliebig gestalteten Nut- und Feder-Brettern entfaltet. Besonders geeignet ist die Befestigungsklammer 100, bevorzugt in Kombination mit der erfindungsgemäßen Befestigungsanordnung 10, zur Anbringung derjenigen Platten und Paneele, die in der WO 02/52113 der Anmelderin beschrieben sind. Darin wird erläutert, wie durch eine Klammer eine untere Nutwange eines Nut-Paneels umgriffen wird, und dieses durch eine Klammer in einer Richtung weitgehend senkrecht zu ihrer Ebene festgelegt wird. Es wurde vorangehend erläutert, dass aufgrund der festen Verbindung, insbesondere Verrastung, der einzelnen Platten miteinander eine Bewegung der Platten bezüglich der Tragkonstruktion zuzulassen ist. Dementsprechend muss auch eine hierbei verwendete Mittelklammer diese Bewegung zulassen. Gleichzeitig bietet es jedoch Vorteile, wenn eine oder mehrere Klammern vor oder während des Anbringvorgangs zumindest mit einer gewissen Kraft an einer Platte fixiert werden können, um ein Herunterfallen der Klammern bis zu deren Fixierung an der Tragkonstruktion zu vermeiden. Hierfür wurde die in den Fig. 12 und 13 gezeigte Mittelklammer 100 entwickelt.

Diese Mittelklammer 100 weist verschiedene Verstärkungssicken 102 sowie ein Langloch 104 für die anpassbare Anbringung an einer Tragkonstruktion auf. Wie am besten aus der Schnittdarstellung von Fig. 13 hervorgeht, ist aus der Basis 106 der Mittelklammer 100 ein weitgehend U-förmiger Klammerabschnitt 108 ausgestanzt und entsprechend gebogen. Mit diesem Klammerabschnitt 108 kann die Klammer 100 an die Kante einer anzubringenden Platte oder au die untere Nutwange einer mit einer Nut versehenen Platte aufgesteckt werden. Wie vorangehend bereits erwähnt, werden Platten, die beispielsweise mit der Klammer 100 zu befestigen sind, an einer Kante mit einer Feder in die Nut einer bereits montierten Platte gefügt und bevorzugt unter Ausbildung einer Presspassung verriegelt. Hierbei erfolgt eine Schwenkbewegung um diejenige Kante der anzubringenden Platte, die mit der Feder versehen ist. Die bei dieser Schwenkbewegung in ihre Endposition gelangende gegenüberliegende Kante, die dementsprechend eine Nut aufweist, kann mit der gezeigten Klammer 100 fixiert werden. Insbesondere verhindert derjenige Abschnitt 110 des Klammerabschnitts, der sich weitgehend parallel zu der Basis 106 erstreckt, dass sich die Platte in der Richtung A senkrecht zu der Plattenebene lösen kann.

Eine der Besonderheiten der gezeigten Klammer 100 besteht darin, dass zumindest ein Klemmabschnitt 112, bei der dargestellten Ausführungsform in Form einer Federzunge, ausgebildet ist. Hierdurch kann die Klammer an der Platte, insbesondere an deren unterer Nutwange, festgeklemmt werden, wobei sie gleichzeitig in sämtlichen Richtungen in der Ebene der Platte, also in sämtlichen Richtungen senkrecht zu der Richtung A, beweglich ist. Durch die Klemmung kann realisiert werden, dass vor dem Anbringen einer Platte mehrere der gezeigten Klammern an der freien Kante der Platte festgeklemmt werden, so dass während des Anbringvorgangs ein Herunterfallen verhindert wird. Sobald die Platte ihre endgültige Position erreicht hat, werden die Klammern beispielsweise durch Eindrehen einer Schraube durch das Langloch 104 in die darunter liegende Tragkonstruktion fixiert. Auch nachfolgend gewährleistet die gezeigte Klammer 100, dass die Platte in dem Klammerabschnitt in sämtlichen Richtungen senkrecht zu der Richtung A mit Spiel aufgenommen ist. Hierdurch können diejenigen Bewegungen der Platten zugelassen werden, die auftreten, wenn sich ein Verbund mehrerer Platten, die miteinander durch Ausbildung einer Presspassung vergleichsweise fest verriegelt sind, infolge von Feuchtigkeitsveränderungen ausdehnt oder schwindet.

Bei der gezeigten Ausführungsform sind hierbei auch an dem Steg 114 des Klammerabschnitts 108 zwei in diesem Fall vergleichsweise kurze Federzungen 116 vorhanden. Bei der Anbringung der Klammer an der freien Kante einer Platte kann diese bis zum Erreichen des freien Endes der Federzungen 116 aufgesteckt werden. Nach dem Fixieren der Klammer an der darunter liegenden Tragkonstruktion wird durch die Nachgiebigkeit der Federzungen 116 immer noch die gewünschte Beweglichkeit der Platte bezüglich der an der Tragkonstruktion fixierten Klammer 100 gewährleistet.

## Patentansprüche

1. Kombination einer Platte (12) oder eines Paneels mit zumindest einer Befestigungsanordnung (10), die zumindest ein an einer Tragkonstruktion (14) befestigbares Basisteil (16) und zumindest ein Halteteil (18) aufweist, das in einem Ausgangszustand in einer Richtung (A) weitgehend senkrecht zur Ebene der Platte (12) oder des Paneels bezüglich des Basisteils (16) oder der Platte (12) oder des Paneels lose ist, und das im angebrachten Zustand der Platte (12) oder des Paneels oder beim Anbringen der Platte (12) oder des Paneels im Bereich einer Kante (20) derselben oder desselben in einer Richtung (B) weitgehend senkrecht zu der Kante (20) und von dieser weg oder parallel (C) zur Kante (20) der Platte (12) oder des Paneels verschiebbar und hierdurch mit der Platte (12), dem Paneel oder dem Basisteil (16) derart verbindbar, insbesondere verrastbar ist, dass es bezüglich des Basisteils (16) und der Platte (12) oder des Paneels in einer Richtung (A) senkrecht zur Ebene der Platte (12) oder des Paneels festgelegt ist, und in einer Richtung (B) senkrecht zur Kante (20) der Platte oder des Paneels bezüglich entweder der Platte (12) bzw. des Paneels oder des Basisteils (16) festgelegt ist.

2. Kombination nach Anspruch 1, **dadurch gekennzeichnet, dass** das Basisteil (16) und/oder das Halteteil (18) als Stanz-/Biegeteile aus Blech ausgeführt sind.

3. Kombination nach zumindest einem der vorangehenden Ansprüche, **dadurch gekennzeichnet, dass** das Basisteil (16) zumindest einen Vorsprung (44, 46) zur Festlegung des Halteteils (18) aufweist.

4. Kombination nach zumindest einem der vorangehenden Ansprüche, **dadurch gekennzeichnet, dass** das Halteteil (18) zumindest eine Klemmeinrichtung, insbesondere eine Federzunge (60), für eine Klemmung an der Platte (12) oder dem Paneel aufweist.

5. Kombination nach zumindest einem der vorangehenden Ansprüche, **dadurch gekennzeichnet, dass** das Halteteil (18) zumindest eine Federzunge (68) für eine Verrastung mit dem Basisteil (16) aufweist.

6. Kombination nach zumindest einem der vorangehenden Ansprüche, **dadurch gekennzeichnet, dass** das Halteteil (18) zumindest eine Aussparung (66) aufweist, in die vorzugsweise ein Schraubendreher einfügbar ist.

7. Kombination nach zumindest einem der vorangehenden Ansprüche, **dadurch gekennzeichnet, dass** das Halte- (18) und/oder das Basisteil (16) bezogen auf die Erstreckung einer festzulegenden Platten- oder Paneelkante (20) vergleichsweise kurze Bauteile sind.

8. Kombination nach zumindest einem der vorangehenden Ansprüche, **dadurch gekennzeichnet, dass** das Halte- (18) und/oder das Basisteil (16) eine längliche Erstreckung in Richtung einer festzulegenden Platten- oder Paneelkante (20) aufweisen.

9. Kombination nach zumindest einem der vorangehenden Ansprüche, **dadurch gekennzeichnet, dass** das Basisteil (16) und/oder das Halteteil (18) einen Befestigungsabschnitt (52) zur Anbringung eines Abdeckprofils (24) aufweisen.

10. Kombination nach Anspruch 9, **dadurch gekennzeichnet, dass** der Befestigungsabschnitt (52) zumindest eine Federzunge (54) aufweist.

11. Kombination nach zumindest einem der vorangehenden Ansprüche, ferner mit zumindest einem Abdeckprofil (24).

12. Kombination nach Anspruch 11, **dadurch gekennzeichnet, dass** das Abdeckprofil (24) etwas mehr als die ein- oder zweifache Breite der an der Platten- oder Paneeloberseite sichtbaren Abschnitte der Befestigungsanordnung (10) aufweist.

13. Kombination nach Anspruch 11 oder 12, **dadurch gekennzeichnet, dass** das Abdeckprofil einen ersten Abdeckabschnitt und einen zweiten Abdeckabschnitt aufweist, der winkelig, vorzugsweise flexibel, mit dem ersten Abdeckabschnitt verbunden ist.

14. Kombination nach einem der Ansprüche 1 bis 13 mit mehreren Befestigungsanordnungen und mehreren, verschiedenen Abdeckprofilen.

15. Verfahren zur Befestigung einer Platte (12), eines Paneels oder dergleichen, an einer Tragkonstruktion (14), mit folgenden Schritten:
- Befestigen eines Basisteils (16) an der Tragkonstruktion (14),
- Vorsehen eines Halteteils (18), das bezüglich des Basisteils (16) oder der Platte (12) lose ist,
- Schwenken der Platte (12) oder Bewegen derselben in einer Richtung (A) weitgehend senkrecht zu ihrer Oberfläche in eine Anbringposition,
- nachfolgendes Verschieben des Halteteils (18) in einer Richtung weitgehend senkrecht zu der Kante (20) und von dieser weg oder parallel zur Kante (20) der Platte (12) und hierdurch
- Verbinden, insbesondere Verrasten, des Halteteils (18) mit der Platte (12) oder dem Basisteil (16) derart, dass das Halteteil (18) bezüglich des Basisteils (16) und der Platte (12) in einer Richtung senkrecht zur Ebene der Platte (12) festgelegt wird, und in einer Richtung senkrecht zur Kante der Platte (12) bezüglich entweder der Platte (12) oder des Basisteils (16) festgelegt wird.

16. Verfahren nach Anspruch 15, **dadurch gekennzeichnet, dass** das Halteteil (18) zumindest eine Aussparung (66) aufweist, und die Verschiebung des Halteteils (18) mittels eines Schraubendrehers durchgeführt wird.

17. Verfahren nach Anspruch 15 oder 16, **dadurch gekennzeichnet, dass** ferner an das Basis- (16) und/oder das Halteteil (18) ein Abdeckprofil (24) angebracht wird.

## Claims

1. Combination of a board (12) or a panel with at least one fastening arrangement (10), having at least one base part (16), which can be fastened to a support structure (14), and at least one holding part (18), which in an initial state is detached in a direction (A) largely perpendicular to the plane of the board (12) or the panel in respect of the base part (16) or the board (12) or the panel and which in the attached state of the board (12) or the panel or if the board (12) or the panel is attached in the area of an edge (20) thereof can be displaced in a direction (B) largely perpendicular to the edge (20) and away from it or parallel (C) to the edge (20) of the board (12) or the panel and in this way can be connected, in particular locked, to the board (12), the panel or the base part (16) in such a way that it is fixed in respect of the base part (16) and the board (12) or the panel in a direction (A) perpendicular to the plane of the board (12) or the panel and is fixed in a direction (B) perpendicular to the edge (20) of the board or the panel in respect of either the board (12) or the panel or the base part (16).

2. Combination according to claim 1, **characterised in that** the base part (16) and/or the holding part (18) are constructed as pressed parts made of sheet metal.

3. Combination according to at least one of the preceding claims, **characterised in that** the base part (16) has at least one projection (44, 46) for fixing the holding part (18).

4. Combination according to at least one of the preceding claims, **characterised in that** the holding part (18) has at least one clamping device, in particular a flexible tongue (60) for clamping to the board (12) or the panel.

5. Combination according to at least one of the preceding claims, **characterised in that** the holding part (18) has at least one flexible tongue (68) for locking to the base part (16).

6. Combination according to at least one of the preceding claims, **characterised in that** the holding part (18) has at least one recess (66) into which preferably a screwdriver can be inserted.

7. Combination according to at least one of the preceding claims, **characterised in that** the holding part (18) and/or the base part (16) are comparatively short components in relation to the extension of an edge (20) of a board or panel to be fixed.

8. Combination according to at least one of the preceding claims, **characterised in that** the holding part (18) and/or the base part (16) have an elongated extension in the direction of an edge (20) of a board or panel to be fixed.

9. Combination according to at least one of the preceding claims, **characterised in that** the base part (16) and/or the holding part (18) have a fastening section (52) for attaching a cover profile (24).

10. Combination according to claim 9, **characterised in that** the fastening section (52) has at least one flexible tongue (54).

11. Combination according to at least one of the preceding claims, further with at least one cover profile (24).

12. Combination according to claim 11, **characterised in that** the cover profile (24) has slightly more than once or twice the width of the sections of the fastening arrangement (10) visible on the upper side of the board or panel.

13. Combination according to claim 11 or 12, **characterised in that** the cover profile has a first cover section and a second cover section, which is connected at an angle, preferably flexibly, to the first cover section.

14. Combination according to one of claims 1 to 13 with several fastening arrangements and several different cover profiles.

15. Method for fastening a board (12), a panel or such to a support structure (14), with the following steps:
- fastening a base part (16) to the support structure (14),
- providing a holding part (18), which is detached in respect of the base part (16) or the board (12),
- swivelling the board (12) or moving it in a direction (A) largely perpendicular to its surface into an attaching position,
- subsequent displacing of the holding part (18) in a direction largely perpendicular to the edge (20) and away from it or parallel to the edge (20) of the board (12) and by this means
- connecting, in particular locking, the holding part (18) to the board (12) or the base part (16) in such a way that the holding part (18) is fixed in a direction perpendicular to the plane of the board (12) in respect of the base part (16) and the board (12) and is fixed in a direction perpendicular to the edge of the board (12) in respect of either the board (12) or the base part (16).

16. Method according to claim 15, **characterised in that** the holding part (18) has at least one recess (66) and the displacement of the holding part (18) is carried out by means of a screwdriver.

17. Method according to claim 15 or 16, **characterised in that** a cover profile (24) is further attached to the base part (16) and/or the holding part (18).

## Revendications

1. Combinaison d'une plaque (12) ou d'un panneau avec au moins un dispositif de fixation (10) qui comprend au moins une partie de base (16) pouvant être fixée à une construction porteuse (14) et au moins une partie de maintien (18) qui est, dans un état initial, mobile par rapport à la partie de base (16) ou à la plaque (12) ou au panneau dans une direction (A) substantiellement perpendiculaire au plan de la plaque (12) ou du panneau et qui est déplaçable, dans l'état fixé de la plaque (12) ou du panneau ou lors de la fixation de la plaque (12) ou du panneau, au niveau de la zone d'une arête (20) de celle-ci ou de cellui-ci dans une direction (B) substantiellement perpendiculaire à l'arête (20) et s'éloignant de celle-ci ou parallèlement (C) à l'arête (20) de la plaque (12) ou du panneau et qui peut être de cette façon reliée, en particulier enclenchée, avec la plaque (12), le panneau ou la partie de base (16) de telle façon qu'elle est fixée par rapport à la partie de base (16) et la plaque (12) ou le panneau dans une direction (A) perpendiculaire au plan de la plaque (12) ou du panneau et est fixée dans une direction (B) perpendiculaire à l'arête (20) de la plaque ou du panneau par rapport soit à la plaque (12) ou au panneau soit à la partie de base (16).

2. Combinaison selon la revendication 1 **caractérisée en ce que** la partie de base (16) et/ou la partie de maintien (18) sont réalisées sous forme de pièces découpées/pliées en tôle.

3. Combinaison selon au moins une des revendications précédentes, **caractérisée en ce que** la partie de base (16) comprend au moins une partie saillante (44, 46) pour la fixation de la partie de maintien (18).

4. Combinaison selon au moins une des revendications précédentes, **caractérisée en ce que** la partie de maintien (18) comprend au moins un mécanisme de serrage, en particulier une lame de ressort (60) pour un serrage au niveau de la plaque (12) ou du panneau.

5. Combinaison selon au moins une des revendications précédentes, **caractérisée en ce que** la partie de maintien (18) comprend au moins une lame de ressort (68) pour un enclenchement avec la partie de base (16).

6. Combinaison selon au moins une des revendications précédentes, **caractérisée en ce que** la partie de maintien (18) comprend au moins un évidement (66) dans lequel, de préférence, un tournevis peut être introduit.

7. Combinaison selon au moins une des revendications précédentes, **caractérisée en ce que** la partie de maintien (18) et/ou la partie de base (16) sont des éléments de construction courts par rapport à l'étendue d'une arête (20) de plaque ou de panneau à fixer.

8. Combinaison selon au moins une des revendications précédentes, **caractérisée en ce que** la partie de maintien (18) et/ou la partie de base (16) ont/a une étendue allongée en direction d'une arête (20) de plaque ou de panneau à fixer.

9. Combinaison selon au moins une des revendications précédentes, **caractérisée en ce que** la partie de base (16) et/ou la partie de maintien (18) comportent/comporte un segment d'attache (52) pour l'attache d'un profil de recouvrement (24).

10. Combinaison selon la revendication 9, **caractérisée en ce que** le segment d'attache (52) comprend au moins une lame de ressort (54).

11. Combinaison selon au moins une des revendications précédentes, avec de plus, au moins un profil de recouvrement (24).

12. Combinaison selon la revendication 11, **caractérisée en ce que** le profil de recouvrement (24) a une largeur égale à un peu plus que la largeur simple ou double des sections du dispositif de fixation visibles au niveau de la surface supérieure de la plaque ou du panneau.

13. Combinaison selon la revendication 11 ou 12, **caractérisée en ce que** le profil de recouvrement comprend une première section de recouvrement et une deuxième section de recouvrement qui est reliée en faisant un angle, de préférence de façon flexible, avec la première section de recouvrement.

14. Combinaison selon une des revendications 1 à 13, avec plusieurs dispositifs de fixation et plusieurs profils de recouvrement différents.

15. Procédé pour la fixation d'une plaque (12), d'un panneau ou similaire à une construction porteuse (14) comprenant les étapes suivantes :
- fixer une partie de base (16) à la construction porteuse (14),
- prévoir une partie de maintien (18) mobile par rapport à la partie de base (16) ou à la plaque (12),
- pivoter la plaque (12) ou bouger celle-ci dans une direction (A) substantiellement perpendiculaire à sa surface dans une position de fixation,
- puis déplacer la partie de maintien (18) dans une direction substantiellement perpendiculaire à l'arête (20) et s'éloignant de celle-ci
ou parallèle à l'arête (20) de la plaque (12) et, de cette façon
- raccorder, en particulier enclencher la partie de maintien (18) avec la plaque (12) ou la partie de base (16) de telle façon que la partie de maintien (18) est fixée par rapport à la partie de base (16) et la plaque (12) dans une direction perpendiculaire au plan de la plaque (12) et est fixée dans une direction perpendiculaire à l'arête de la plaque (12) par rapport soit à la plaque (12) soit à la partie de base (16).

16. Procédé selon la revendication 15, **caractérisé en ce que** la partie de maintien (18) comprend au moins un évidement (66) et le déplacement de la partie de maintien (18) est réalisé à l'aide d'un tournevis.

17. Procédé selon la revendication 15 ou 16 **caractérisé en ce qu'**un profil de recouvrement (24) est, de plus, fixé à la partie de base (16) et/ou à la partie de maintien (18).
